(19) **Europäisches Patentamt / European Patent Office / Office européen des brevets**

(11) **EP 2 872 604 B1**

(12) **EUROPEAN PATENT SPECIFICATION**

(45) Date of publication and mention of the grant of the patent:
**12.09.2018 Bulletin 2018/37**

(21) Application number: **13762902.8**

(22) Date of filing: **12.07.2013**

(51) Int Cl.:
**C10G 53/06** *(2006.01)* **C08L 95/00** *(2006.01)*

(86) International application number:
**PCT/IB2013/055736**

(87) International publication number:
**WO 2014/013399 (23.01.2014 Gazette 2014/04)**

(54) **PROCESS FOR PRODUCING VARIOUS VISCOSITY GRADES OF BITUMEN**

VERFAHREN ZUR HERSTELLUNG VON VERSCHIEDENEN VISCOSEN BITUMEN

PROCÉDÉ DE PRÉPARATION DE BITUMES À VISCOSITÉS DIVERSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.07.2012 IN 2039MU2012**

(43) Date of publication of application:
**20.05.2015 Bulletin 2015/21**

(73) Proprietor: **Indian Oil Corporation Ltd
Mumbai 400 051 Maharashtra (IN)**

(72) Inventors:
- **RAMAN, Naduhatty, Selai**
  **Faridabad**
  **Haryana 121007 (IN)**
- **MOHANASUNDARAM, Palvannan**
  **Faridabad**
  **Haryana 121007 (IN)**
- **DEVOTTA, Irudayaraj**
  **Faridabad**
  **Haryana 121007 (IN)**
- **SHARMA, Kishan, Chand**
  **Faridabad**
  **Haryana 121007 (IN)**
- **KAGDIYAL, Vivekanand**
  **Faridabad**
  **Haryana 121007 (IN)**
- **SAXENA, Deepak**
  **Faridabad**
  **Haryana 121007 (IN)**
- **KUMAR, Brijesh**
  **Faridabad**
  **Haryana 121007 (IN)**
- **GUPTA, Anurag, Ateet**
  **Faridabad**
  **Haryana 121007 (IN)**
- **RAJAGOPAL, Santanam**
  **Faridabad**
  **Haryana 121007 (IN)**
- **MALHOTRA, Ravinder, Kumar**
  **Faridabad**
  **Haryana 121007 (IN)**

(74) Representative: **Høiberg P/S
Adelgade 12
1304 Copenhagen K (DK)**

(56) References cited:
EP-A2- 1 148 112          WO-A1-2010/072832
WO-A1-2011/098096     WO-A1-2013/140272
US-A- 5 034 119             US-A- 5 178 750

EP 2 872 604 B1

## Description

### Field of the Invention:

The present invention relates to a process for preparing the bitumen using a aromatic enriched deasphalted oil extract fraction. The aromatic enriched deasphalted oil extract fraction can be used preparing plurality of grades of bitumen. Also, bitumen obtained in accordance with the present invention contains extremely low concentration of poly cyclic aromatics and more particularly benzo(a)pyrene.

### Background of the Invention:

As is conventionally known, for production of bitumen, primary asphalt obtained from deasphalting process is blended with aromatic extract obtained from an extraction process. However, bitumen thus obtained has been observed to contain high concentration of poly cyclic aromatics (PCA), which are now categorized as carcinogenic material. In addition to the concentration of PCA, which is required to be low, it is also preferred that the bitumen thus obtained has to be substantially free of benzo(a)pyrene. Even if present, benzo(a)pyrene is to be present at concentration of less than 1 ppm.

In addition, it is well known that bitumen is classified into various grades depending on application. While the aforesaid requirements relating to the concentration of PCA and benzo(a)pyrene being very low, the bitumen should be such that it can be utilized effectively for the desired end application. In this regard, it is well known that bitumen is classified into the at least four grades namely Viscosity Grade-10 (VG10) grade bitumen, Viscosity Grade-20 (VG20) grade bitumen, Viscosity Grade-30 (VG30) grade bitumen and Viscosity Grade-40 (VG40) grade bitumen.

By way of example, Viscosity Grade-10 (VG10) grade bitumen is required to have a minimum kinematic viscosity of 250 cSt at 135° C, a minimum absolute viscosity of 800 poise at 60° C, a penetration point ranging from 80 to 100 (1/10mm) at 25° C and a minimum softening point of 40° C. Viscosity Grade-20 (VG20) grade bitumen is required to have a minimum kinematic viscosity of 300 cSt at 135° C, a minimum absolute viscosity of 1600 poise at 60° C, a penetration point ranging from 60 to 80 (1/10mm) at 25° C and a minimum softening point of 45° C. On the other hand Viscosity Grade-30 (VG30) grade bitumen is required to have a minimum kinematic viscosity of 350 cSt at 135 °C, a minimum absolute viscosity of 2400 poise at 60° C, a penetration point range from 50 to 70 (1/10mm) at 25° C and a minimum softening point of 47° C. Lastly, Viscosity Grade-40 (VG40) grade bitumen is required to have a minimum kinematic viscosity of 400 cSt at 135° C, a minimum absolute viscosity of 3200 poise at 60° C, a penetration point range from 40 to 60 (1/10mm) at 25° C and a minimum softening point of 50° C. Further details of the various Thus, it can be clearly observed that the aforesaid plurality of grades of bitumen have diverse properties.

Presently, the industry practice for producing the aforesaid different grades of bitumen is to blend primary asphalt obtained from deasphalting process is blended with aromatic extracts having different boiling ranges. More particularly, aromatic extract obtained from Inter neutral as the feed is used for preparing a first grade of bitumen, while aromatic extract obtained from Heavy neutral as the feed is used for preparing a second grade of bitumen and aromatic extract obtained from Bright neutral as the feed is used for preparing a third grade of bitumen, and so on.

By way of example, US Patent No.5308470 claims non-carcinogenic asphalt blending stock with mutagenic index less than 1.0 which is limited to mutagenic index and its relationship with physical property (boiling point).

US Patent No. 5,961,709 discloses an environmentally improved asphalt paving composition which contains a solvent precipitated asphaltene and paraffinic fluxing component. However it does not disclose the process of making various viscosity grades of bitumen using aromatic extract and the amount of PCA in the bitumen.

US patent No. 5,403,526 discloses a process for preparing a benzo(a)pyrene free carbon containing refractory ceramic material using bitumen-resin etc. However, this patent does not disclose the various viscosity grades bitumen with low poly cyclic aromatic contents.

US 5034119 discloses non-carcinogenic bright stock extracts and/ or de-asphalted oils which are produced from reduced hydrocarbon feedstock. Such non-carcinogenic products have a mutagenicity index of less than 1.0. However, it does not discloses the method of preparation of various grades of Bitumen having de-asphalted aromatic extract with reduced contents of specific carcinogenic products like poly cyclic aromatic ingredient and benzo(a)pyrenes.

EP 1148112 discloses a process for production of rubber oil and high viscosity base oil by using de-asphalted aromatic extract having poly cyclic aromatic extract less than 3%. However, it does not disclose the method of preparation of various grades of Bitumen which involves blending of de-asphalted aromatic extract with asphalt separated from de-asphalted oil during separation process.

WO 2013140272 discloses method for preparation of rubber process oil by using the aromatic enriched de-asphalted extract and blending it with heavy alkyl benzene (HAB) or HAB with solvent processed base oil or HAB with hydro processed base oil or mixture thereof. However, it does not disclose the method of preparation of various grades of Bitumen which involves blending of de-asphalted aromatic extract with asphalt separated from de-asphalted oil during separation process.

WO 2010/072832 discloses a bitumen composition characterised in that it contains 2 to less than 8% by weight of a styrene-butadiene-styrene block copolymer (SBS) and 0.3 to 3% by weight of a polycyclic diterpene comprising one or more carboxyl groups and having in its molecular formula 20 carbon atoms, and the remaining portion comprising bitumen. However, it does not disclose the method of preparation of various grades of Bitumen which involves blending of de-asphalted aromatic extract with asphalt separated from de-asphalted oil during separation process.

Thus, from the above, it can be observed that there is no teaching relating to an aromatic enriched deasphalted oil extract fraction for preparing bitumen, wherein the aromatic enriched deasphalted oil extract fraction in itself comprises very low concentration of PCA, is substantially free of benzo(a)pyrene and is capable of being used to prepare plurality of grades of bitumen. Thus, there is a need to provide improved solutions in this direction.

**Objects of the Invention:**

Thus, it is an object of the invention to provide an aromatic enriched deasphalted oil extract fraction for preparing bitumen, wherein the aromatic enriched deasphalted oil extract fraction in itself comprises very low concentration of PCA, is substantially free of benzo(a)pyrene and is capable of being used to prepare plurality of grades of bitumen.

Another object of the invention is to provide a process for preparing the aromatic enriched deasphalted oil extract fraction.

Yet another objet of the invention is to provide bitumen of varying grades comprising very low concentration of PCA and substantially free of benzo(a)pyrene.

Still another object of the invention is to provide processes for preparing bitumen of varying grades comprising very low concentration of PCA and substantially free of benzo(a)pyrene.

**Detailed Description of the Invention:**

The present invention provides an aromatic enriched deasphalted oil extract fraction for preparing bitumen, comprising ingredients having a minimum initial boiling point (IBP) of 490° C; at least 10 wt% of ingredients in the boiling range of IBP to 550° C; and ingredients contributing to aromatic carbon in the range of 25 to 75 wt%. The aromatic enriched deasphalted oil extract fraction exhibits an aniline point in the range of 55° to 70° C. Also, the aromatic enriched deasphalted oil extract fraction comprises less than 10 ppm of poly cyclic aromatics (PCA) ingredients selected from the group consisting of benzo(a)anthracene+chrysene, benzo(j)floranthene, benzo(e)pyrene, benzo(b)floranthene, benzo(K)floranthene, benzo(a)pyrene and dibenzo(a,h)anthracene; with benzo(a)pyrene concentration of less than 1 ppm.

Not being bounded by any particular theory, it is believed that an aromatic enriched deasphalted oil extract fraction comprising ingredients having a minimum initial boiling point (IBP) of 490° C; with at least 10 wt% of ingredients in the boiling range of IBP to 550° C; and ingredients contributing to aromatic carbon being in the range of 25 to 75 wt% contributes to higher solubility of asphalt.

Once again, not being bounded to any particular theory, it is believed that the aromatic enriched deasphalted oil extract fraction of the aforesaid nature exhibits a strong molecular cohesion with regard to asphalt and hence, is therefore better suited for preparing bitumen. One of the problems which is generally faced by the industry while preparing solvent for use in bitumen preparation is that asphalt is a mixture of many compounds with a wide range of solubility parameters. Similarly, the solvents which are used are also a mixture of many compounds with a wide range of solubility parameters. Sometimes, Hildebrand solubility parameter (which describes the total cohesive energy density of the molecule) is taken for a preliminary and crude tool to determine suitability of a particular solvent for use in bitumen preparation, wherein Hildebrand solubility parameter for a molecule is derived from the heat of vaporization of the molecule using the following formula:

$$\text{Hildebrand solubility parameter } (\delta) = ((\blacktriangle H - RT)/V_m)^{0.5}$$

wherein ▲H - Heat of vaporization, R - Gas Constant, T-Absolute temperature , $V_m$-Molar volume.

In this regard, while it is not possible to determine the Hildebrand value of the aromatic enriched deasphalted oil extract fraction as a whole, because it tends to comprise many molecules. Once again, without being bounded to any particular theory, it is believed that the aromatic enriched deasphalted oil extract fraction of the aforesaid nature is enriched with ingredients which have Hildebrand solubility value in the range of 18 to 22 and hence, exhibits a strong molecular cohesion with regard to asphalt.

Since, Hildebrand value of the aromatic enriched deasphalted oil extract fraction as a whole is not determinable, without being bounded to any particular theory, it is believed that if aniline point of the aromatic enriched deasphalted oil extract fraction is maintained in the range of 55° to 70° C, the aromatic enriched deasphalted oil extract fraction is enriched with ingredients which have Hildebrand solubility value in the range of 18 to 22.

However, it should be noted that an extract possessing only one characteristic, for example merely having aniline point alone in the range of 55° to 70° C is not sufficient or in other words may not provide the desired results. Thus, the extract must possess substantially all of the remaining characteristics. A process is further disclosed for preparing an aromatic enriched deasphalted oil extract fraction for use in preparing bitumen, comprising:

(a) subjecting a reduced crude oil to a distillation process to obtain vacuum residue having a minimum initial boiling point (IBP) of 490° C and comprising at least 10 wt% of ingredients in the boiling range of IBP to 550° C;

(b) subjecting the vacuum residue thus obtained to a de-asphalting process to obtain deasphalted oil and asphalt;

(c) separating the asphalt thus produced; and

(d) subjecting the de-asphalted oil to aromatic extraction process to obtain the aromatic enriched deasphalted oil extract fraction comprising ingredients having a minimum initial boiling point (IBP) of 490° C; at least 10 wt% of ingredients in the boiling range of IBP to 550° C; and ingredients contributing to aromatic carbon in the range of 25 to 75 wt%; the aromatic enriched deasphalted oil extract fraction exhibiting an aniline point in the range of 55° to 70° C; and comprises less than 10 ppm of poly cyclic aromatics (PCA) ingredients selected from the group consisting of benzo(a)anthracene+chrysene, benzo(j)floranthene, benzo(e)pyrene, benzo(b)floranthene, benzo(K)floranthene, benzo(a)pyrene and dibenzo(a,h)anthracene; with benzo(a)pyrene concentration of less than 1 ppm.

In an embodiment of the present invention, the reduced crude oil is selected from the group comprising of Arab mix, Basrah Light, Kuwait, etc.

By way of a non-limiting example, the reduced crude oil has the following characteristics:

| Density | 0.9489 |
|---|---|
| Distillation data (D 1160) °C | |
| IBP | 277 |
| 5 vol % | 325 |
| 10 vol % | 349 |
| 20 vol % | 389 |
| 30 vol % | 432 |
| 40 vol% | 478 |
| 50 vol% | 521 |
| 60 vol% | 561 |

In an embodiment of the present invention, wherein subjecting the reduced crude oil to distillation comprises performing a distillation process in accordance with any of ASTM standard procedure number D1160 or D5236. The vacuum residue obtained is subjected to a de-asphalting process comprising contacting the vacuum reside with a source of propane in a column reactor having top and bottom temperatures of about 65° C and about 55° C, respectively to obtain de-asphalted oil (DAO) and asphalt, wherein about eight parts by volume of propane is contacted with one part by volume of the vacuum reside. The deasphalted oil can be subjected to an extraction process comprising:

(a) contacting the deasphalted oil with a solvent system and producing an extract phase and a raffinate product phase; and

(b) separating the extract phase from the raffinate product phase;

wherein:

(c) the solvent system comprises a primary solvent and a co-solvent capable of facilitating phase separation, wherein the primary solvent comprises N-methyl pyrolidone (NMP) or furfural and the co-solvent comprises one or more aliphatic amides having carbon chain of less than 5 carbon atoms, wherein the co-solvent is preferably selected from formamide, n-methyl formamide and n-n dimethyl formamide and wherein a ratio of primary solvent to the co-solvent is in the range of 70:30 to 95:5.

Bitumen is provided comprising primary asphalt and 1 to 40 wt% of aromatic enriched deasphalted oil extract fraction, wherein the aromatic enriched deasphalted oil extract fraction has a minimum initial boiling point (IBP) of 490°C; comprises at least 10 wt% of ingredients in the boiling range of IBP to 550°C; poly cyclic aromatics (PCA) ingredients selected from the group consisting of benzo(a)anthracene+chrysene, benzo(j)floranthene, benzo(e)pyrene, benzo(b)floranthene, benzo(K)floranthene, benzo(a)pyrene and Dibenzo(a,h)anthracene being present at a concentration of less than 10 ppm; with benzo(a)pyrene concentration of less than 1 ppm; an aniline point in the range of 55° to 70°C and ingredients contributing to aromatic carbon in the range of 25 to 75 wt%.

In an embodiment of the present invention, the bitumen is Viscosity Grade- 10 (VG10) grade bitumen comprising 20 to 40 wt% of aromatic enriched deasphalted oil extract fraction and having a minimum kinematic viscosity of 250 cSt at 135° C, a minimum absolute viscosity of 800 poise at 60° C, a penetration point ranging from 80 to 100 (1/10mm) at 25° C and a minimum softening point of 40° C.

In an embodiment of the present invention, the bitumen is Viscosity Grade-20 (VG20) grade bitumen comprising 15 to 35 wt% of aromatic enriched deasphalted oil extract fraction and having a minimum kinematic viscosity of 300 cSt at 135° C, a minimum absolute viscosity of 1600 poise at 60° C, a penetration point ranging from 60 to 80 (1/10mm) at 25° C and a minimum softening point of 45° C.

In an embodiment of the present invention, the bitumen is Viscosity Grade-30 (VG30) grade bitumen comprising 10 to 30 wt% of aromatic enriched deasphalted oil extract fraction and having a minimum kinematic viscosity of 350 cSt at 135 °C, a minimum absolute viscosity of 2400 poise at 60° C, a penetration point range from 50 to 70 (1/10mm) at 25° C and a minimum softening point of 47° C.

In an embodiment of the present invention the bitumen is Viscosity Grade-40 (VG40) grade bitumen comprising 5 to 25 wt % of aromatic enriched deasphalted oil extract fraction and having a minimum kinematic viscosity of 400 cSt at 135° C, a minimum absolute viscosity of 3200 poise at 60° C, a penetration point range from 40 to 60 (1/10 mm) at 25° C and a minimum softening point of 50° C.

The present invention provides a process for preparing bitumen, comprising:

(a) subjecting a reduced crude oil to a distillation process to obtain vacuum residue having a minimum initial boiling point (IBP) of 490° C and at least 10 wt % of ingredients in the boiling range of IBP to 550° C;

(b) subjecting the vacuum residue thus obtained to a de-asphalting process by contacting with the eight parts by volume of propane added to one part by volume of vacuum residue with column top and bottom temperatures of 65°C and 55°C to obtain de-asphalted oil and asphalt;

(c) separating the asphalt thus produced;

(d) subjecting the de-asphalted oil to aromatic extraction process with N-methyl pyrolidone (NMP) solvent in counter current extractor with top and bottom temperature of 90°C and 80°C and solvent to oil ratio (volume/volume) being maintained at 2.25 to obtain an aromatic enriched deasphalted oil extract fraction having a minimum initial boiling point (IBP) of 490° C; comprising at least 10 wt % of ingredients in the boiling range of IBP to 550° C; poly cyclic aromatics (PCA) ingredients selected from the group consisting of benzo(a)anthracene+chrysene, benzo(j)floranthene, benzo(e)pyrene, benzo(b)floranthene, benzo(K)floranthene, benzo(a)pyrene and Dibenzo(a,h)anthracene being present at a concentration of less than 10 ppm; with benzo(a)pyrene concentration of less than 1 ppm; an aniline point in the range of 55° to 70° C and ingredients contributing to aromatic carbon in the range of 25 to 75 wt %; and

(e) mixing asphalt with 1 to 40 wt % of the aromatic enriched deasphalted oil extract fraction thus obtained in step (d) to get bitumen.

In an embodiment of the present invention, the reduced crude oil is selected from the group comprising of Arab mix, Basrah Light, Kuwait, etc.

In an embodiment of the present invention, wherein subjecting the reduced crude oil to distillation comprises performing a distillation process in accordance with any of ASTM standard procedure number D1160 or D5236.

In another embodiment of the present invention, subjecting the deasphalted oil to extraction process comprises:

(d) contacting the deasphalted oil with a solvent system and producing an extract phase and a raffinate product phase; and

(e) separating the extract phase from the raffinate product phase;

wherein:

(f) the solvent system comprises a primary solvent and a co-solvent capable of facilitating phase separation, wherein the primary solvent comprises N-methyl pyrolidone or furfural and the co-solvent comprises one or more aliphatic amides having carbon chain of less than 5 carbon atoms, wherein the co-solvent is preferably selected from formamide, n-methyl formamide and n-n dimethyl formamide and wherein a ratio of primary solvent to the co-solvent is in the range of 70:30 to 95:5.

The present invention will be further specified through the following examples, which are described with only illustrative purpose, and by no means intended to limiting or restricting the scope of the present invention.

**Example 1:** VG10 grade bitumen

Reduced crude oil is subjected to vacuum distillation process under reduced pressure to obtain vacuum residue. The minimum initial boiling point of resultant vacuum residue is maintained above 500°C. The vacuum residue further is subjected to solvent deasphalting process with the eight parts by volume of propane added to one part by volume of vacuum residue with column top and bottom temperatures of 65°C and 55°C to obtain DAO and asphalt. The deasphalted oil from above process is further subjected to aromatic extraction with N-methyl pyrolidone (NMP) solvent in counter current extractor with top and bottom temperature of 90°C and 80°C and solvent to oil ratio (volume/volume) being maintained at 2.25 to obtain aromatic enriched deasphalted oil extract fraction. The aromatic enriched deasphalted oil extract fraction obtained from the extraction process is blended with asphalt obtained in deasphalting process, composition of extract being 35wt%, for producing VG10 grade bitumen with extremely low polycyclic aromatic compounds.

**Table 1**

| Properties of Viscosity Grade 10 Bitumen derived from blending of DAO extract with Asphalt | | |
|---|---|---|
| S.No. | Property | VG10 grade bitumen |
| 1 | Penetration (1/10 mm) | 88 |
| 2 | Softening point (°C) | 46 |
| 3 | Kinematic Viscosity @ 135°C(cSt) | 310 |
| 4 | Poly Cyclic Aromatic content(ppm)<br>Benzo(a)pyrene content (ppm) | 6 ppm (mass)<br>0.6 ppm (mass) |

**Example 2:** VG20 grade bitumen

Reduced crude oil is subjected to vacuum distillation process under reduced pressure to obtain vacuum residue. The minimum initial boiling point of resultant vacuum residue is maintained above 500°C. The vacuum residue further is subjected to solvent deasphalting process with the eight parts by volume of propane added to one part by volume of vacuum residue with column top and bottom temperatures of 65°C and 55°C to obtain DAO and asphalt. The deasphalted oil from above process is further subjected to aromatic extraction with NMP solvent in counter current extractor with top and bottom temperature of 90°C and 80°C and solvent to oil ratio (volume/volume) being maintained at 2.25 to obtain aromatic enriched deasphalted oil extract fraction. The aromatic enriched deasphalted oil extract fraction obtained from the extraction process is blended with asphalt obtained in deasphalting process, composition of extract being 30wt%, for producing VG20 grade bitumen with extremely low polycyclic aromatic compounds.

**Table 2**

| Properties of Viscosity Grade 20 Bitumen derived from blending of DAO extract with Asphalt | | |
|---|---|---|
| S.No. | Property | VG20 Grade bitumen |
| 1 | Penetration (1/10 mm) | 64 |
| 2 | Softening point (°C) | 48 |
| 3 | Kinematic Viscosity @ 135°C(cSt) | 370 |
| 4 | Poly Cyclic Aromatic content(ppm)<br>Benzo(a)pyrene content (ppm) | 5 ppm<br>0.6 ppm |

<u>**Example 3:**</u> VG30 grade bitumen

Reduced crude oil is subjected to vacuum distillation process under reduced pressure to obtain vacuum residue. The minimum initial boiling point of resultant vacuum residue is maintained above 500°C. The vacuum residue further is subjected to solvent deasphalting process with the eight parts by volume of propane added to one part by volume of vacuum residue with column top and bottom temperatures of 65°C and 55°C to obtain DAO and asphalt. The deasphalted oil from above process is further subjected to aromatic extraction with NMP solvent in counter current extractor with top and bottom temperature of 90°C and 80°C and solvent to oil ratio (volume/volume) being maintained at 2.25 to obtain aromatic enriched deasphalted oil extract fraction. The aromatic enriched deasphalted oil extract fraction obtained from the extraction process is blended with asphalt obtained in deasphalting process, composition of extract being 25 wt% in the blend for producing VG 30 grade bitumen with extremely low polycyclic aromatic compounds

**Table 3**

| Properties of Viscosity Grade 30 Bitumen derived from blending of DAO extract with Asphalt | | |
|---|---|---|
| S.No. | Property | VG30 grade bitumen |
| 1 | Penetration (1/10 mm) | 52 |
| 2 | Softening point (°C) | 51 |
| 3 | Kinematic Viscosity @ 135 °C (cSt) | 428 |
| 4 | Poly Cyclic Aromatic content(ppm) Benzo(a)pyrene content (ppm) | 5 ppm 0.5 ppm |

<u>**Example 4:**</u> VG40 grade bitumen

Reduced crude oil is subjected to vacuum distillation process under reduced pressure to obtain vacuum residue. The minimum initial boiling point of resultant vacuum residue is maintained above 500°C. The vacuum residue further is subjected to solvent deasphalting process with the eight parts by volume of propane added to one part by volume of vacuum residue with column top and bottom temperatures of 65°C and 55°C to obtain DAO and asphalt. The deasphalted oil from above process is further subjected to aromatic extraction with NMP solvent in counter current extractor with top and bottom temperature of 90°C and 80°C and solvent to oil ratio (volume/volume) being maintained at 2.25 to obtain aromatic enriched deasphalted oil extract fraction. The aromatic enriched deasphalted oil extract fraction obtained from the extraction process is blended with asphalt obtained in deasphalting process, composition of extract being 20wt% in the blend for producing VG 40 grade bitumen with extremely low polycyclic aromatic compounds.

**Table 4**

| Properties of Viscosity Grade 20 Bitumen derived from blending of DAO extract with Asphalt | | |
|---|---|---|
| S.No | Property | VG40 grade bitumen |
| 1 | Penetration (1/10 mm) | 43 |
| 2 | Softening point (°C) | 52 |
| 3 | Kinematic Viscosity @ 135°C (cSt) | 494 |
| 4 | Poly Cyclic Aromatic content(ppm) Benzo(a)pyrene content (ppm) | 4 ppm 0.3 ppm |

<u>**Example 5:**</u> Comparative Example

Reduced crude oil is subjected to vacuum distillation process under reduced pressure to obtain vacuum residue. The minimum initial boiling point of resultant vacuum residue is varied as shown in Table 5. The vacuum residue further is subjected to solvent deasphalting process with the eight parts by volume of propane added to one part by volume of vacuum residue with column top and bottom temperatures of 65°C and 55°C to obtain DAO and asphalt. The deasphalted oil from above process is further subjected to aromatic extraction with NMP solvent in counter current extractor with top and bottom temperature of 90°C and 80°C and solvent to oil ratio (volume/volume) being maintained at 2.25 to obtain aromatic enriched deasphalted oil extract fractions. These aromatic enriched deasphalted oil extract fractions are evaluated and the outcome is provided in Table 5. Also, some of the aromatic enriched deasphalted oil extract fractions are taken and bitumen is prepared using the same and their properties are also provided in Table 5.

**Table 5:**

| | IBP | % of ingredients in IBP-550 | Aniline Point (°C) | Benzo (a) Pyrene (ppm) | PAC (ppm) | Aromatic Carbon content | Extract Comp (wt%) | Penetration Point, 1/10m m | Softening Point (°C) | KV (cSt) | Inference |
|---|---|---|---|---|---|---|---|---|---|---|---|
| EX 1 | 490 | Min. 10% | 58 | 0.7 | 4.9 | 31% | | | | | Pass (PAH) |
| EX2 | 490 | Min. 10% | 67 | 0.6 | 4.7 | 28.5% | | | | | Pass (PAH) |
| EX3 | 430 | Min. 10% | 63 | 7.1 | 47 | 32% | | | | | Fail (PAH) |
| EX5 | 400 | Min. 10% | 57 | 8 | 82 | 34% | | | | | Fail (PAH) |
| EX6 | 450 | Min. 10% | 66 | 7 | 35 | 30% | 25% | 99 | 46 | 214 | Fail (KV& PAH) |
| EX7 | 490 | 5% | 89 | 0.6 | 5 | 19% | 19% | 37 | 54 | 498 | Failed (Pen) |
| EX8 | 500 | Min. 10% | 67 | 0.6 | 4.7 | 28% | VG10-25% VG20-22% VG30-19% VG40-17% | 85 64 55 45 | 45 48 49 51 | 310 370 428 494 | Pass |
| EX9 | 500 | 5% | 94 | Less than 1ppm | Less than 10 ppm | 18% | - | - | - | - | Failed in aniline Point |
| EX10 | 500 | Min. 10% | 68 | Less than 1ppm | Less than 10 ppm | 26% | - | - | - | - | Pass |

It may be noted that the embodiments illustrated and discussed in this specification are intended only to teach to those skilled in the art the best way known to the Inventors to make and use the invention.

**Claims**

1.    A process for preparing bitumen, comprising:

   a. subjecting a reduced crude oil to a distillation process to obtain vacuum residue having a minimum initial boiling point (IBP) of 490° C and comprising at least 10 wt% of ingredients in the boiling range of IBP to 550° C;
   b. subjecting the vacuum residue thus obtained to a de-asphalting process by contacting with the eight parts by volume of propane added to one part by volume of vacuum residue with column top and bottom temperatures of 65°C and 55°C to obtain de-asphalted oil and asphalt;
   c. separating the asphalt thus produced;
   d. subjecting the de-asphalted oil to aromatic extraction process with N-methyl pyrolidone (NMP) solvent in counter current extractor with top and bottom temperature of 90°C and 80°C and solvent to oil ratio (volume/volume) being maintained at 2.25 to obtain an aromatic enriched deasphalted oil extract fraction having a minimum initial boiling point (IBP) of 490° C; comprising at least 10 wt% of ingredients in the boiling range of IBP to 550° C; poly cyclic aromatics (PCA) ingredients selected from the group consisting of benzo(a)anthracene+chrysene, benzo(j)floranthene, benzo(e)pyrene, benzo(b)floranthene, benzo(K)floranthene, benzo(a)pyrene and Dibenzo(a,h)anthracene being present at a concentration of less than 10 ppm; with benzo(a)pyrene concentration of less than 1 ppm; an aniline point in the range of 55° to 70° C and ingredients contributing to aromatic carbon in the range of 25 to 75 wt%; and
   e. mixing asphalt with 1 to 40 wt% of the aromatic enriched deasphalted oil extract fraction thus obtained in step (d) to get bitumen.

2.    The process as claimed in claim 1, wherein the reduced crude oil is selected from a group comprising of Arab mix, Basrah Light, and Kuwait and the reduced crude oil has the following characteristics:

| Density | 0.9489 |
|---|---|
| Distillation data (D 1160) °C | |
| IBP | 277 |
| 5 vol % | 325 |
| 10 vol % | 349 |
| 20 vol % | 389 |
| 30 vol % | 432 |
| 40 vol % | 478 |
| 50 vol % | 521 |
| 60 vol % | 561 |

3.    The process as claimed in claim 1, wherein subjecting the reduced crude oil to distillation comprises performing a distillation process in accordance with any of ASTM standard procedure number D1160 or D5236.

4.    The process as claimed in claim 1, wherein the said bitumen is Viscosity Grade-10 (VG10) grade bitumen comprising 20 to 40 wt% of aromatic enriched deasphalted oil extract fraction and having a minimum kinematic viscosity of 250 cSt at 135° C, a minimum absolute viscosity of 800 poise at 60° C, a penetration point ranging from 80 to 100 (1/10mm) at 25° C and a minimum softening point of 40° C; or
Viscosity Grade-20 (VG20) grade bitumen comprising 15 to 35 wt% of aromatic enriched deasphalted oil extract fraction and having a minimum kinematic viscosity of 300 cSt at 135° C, a minimum absolute viscosity of 1600 poise at 60° C, a penetration point ranging from 60 to 80 (1/10mm) at 25° C and a minimum softening point of 45° C.

5.    The process as claimed in claim 1, wherein the said bitumen is Viscosity Grade-30 (VG30) grade bitumen comprising 10 to 30 wt% of aromatic enriched deasphalted oil extract fraction and having a minimum kinematic viscosity of 350 cSt at 135 °C, a minimum absolute viscosity of 2400 poise at 60° C, a penetration point range from 50 to 70 (1/10mm) at 25° C and a minimum softening point of 47° C; or

Viscosity Grade-40 (VG40) grade bitumen comprising 5 to 25 wt% of aromatic enriched deasphalted oil extract fraction and having a minimum kinematic viscosity of 400 cSt at 135° C, a minimum absolute viscosity of 3200 poise at 60° C, a penetration point range from 40 to 60 (1/10mm) at 25° C and a minimum softening point of 50° C.

**Patentansprüche**

1. Verfahren zur Herstellung von Bitumen, umfassend:

   a. Unterziehen eines reduzierten Rohöls einem Destillationsprozess, um Vakuumrückstand zu erhalten, mit einem minimalen Siedebeginn (IBP) von 490 °C und umfassend mindestens 10 Gew.% Bestandteile im Siedebereich von IBP bis 550 °C;

   b. Unterziehen des so erhaltenen Vakuumrückstands einem Entasphaltierungsprozess durch Inkontaktbringen mit den acht Volumenteilen Propan, die zu einem Volumenteil Vakuumrückstand gegeben wurden, mit oberer und unterer Säulentemperatur von 65 °C und 55 °C, um entasphaltiertes Öl und Asphalt zu erhalten;

   c. Abtrennen des so produzierten Asphalts;

   d. Unterziehen des entasphaltierten Öls einem Aromatenextraktionsprozess mit N-Methylpyrrolidon- (NMP) Lösungsmittel in einem Gegenstromextraktor mit einer oberen und unteren Temperatur von 90 °C und 80 °C, und einem Verhältnis von Lösungsmittel zu Öl (Volumen / Volumen), das auf 2,25 gehalten wird, um eine an Aromaten angereicherte entasphaltierte Ölextraktfraktion mit einem minimalen Siedebeginn (IBP) von 490 °C zu erhalten; umfassend mindestens 10 Gew.% Bestandteile im Siedebereich von IBP bis 550 °C; polycyclische Aromaten (PCA)-Bestandteile ausgewählt aus der Gruppe bestehend aus Benzo(a)anthracen+Chrysen, Benzo(j)fluoranthen, Benzo(e)pyren, Benzo-(b)fluoranthen, Benzo(K)fluoranthen, Benzo(a)pyren und Dibenzo(a,h)anthracen, die in einer Konzentration von weniger als 10 ppm vorhanden sind; mit einer Benzo(a)-pyren-Konzentration von weniger als 1 ppm; mit einem Anilinpunkt im Bereich von 55 bis 70 °C, und Bestandteile, die zu aromatischem Kohlenstoff beitragen, im Bereich von 25 bis 75 Gew.%; und

   e. Mischen von Asphalt mit 1 bis 40 Gew.% der in Schritt (d) erhaltenen, an Aromaten angereicherten entasphaltierten Ölextraktfraktion, um Bitumen zu erhalten.

2. Verfahren nach Anspruch 1, wobei das reduzierte Rohöl aus einer Gruppe ausgewählt ist, die Arab-Mix, Basrah Light und Kuwait umfasst, und das reduzierte Rohöl die folgenden Eigenschaften aufweist:

| Dichte | 0, 9489 |
|---|---|
| Destillationsdaten | |
| IBP | 277 |
| 5 Vol.% | 325 |
| 10 Vol.% | 349 |
| 20 Vol.% | 389 |
| 30 Vol.% | 432 |
| 40 Vol.% | 478 |
| 50 Vol.% | 521 |
| 60 Vol.% | 561 |

3. Verfahren nach Anspruch 1, wobei das Unterziehen des reduzierten Rohöls der Destillation Durchführen eines Destillationsprozesses gemäß einem beliebigen der ASTM Standardverfahren mit der Nummer D1160 oder D5236 umfasst.

4. Verfahren nach Anspruch 1, wobei das Bitumen ein Bitumen der Viskositätsklasse-10 (VG10) ist, das 20 bis 40 Gew.% an Aromaten angereicherte entasphaltierte Ölextraktfraktion umfasst, und eine minimale kinematische Viskosität von 250 cSt bei 135 °C, eine minimale absolute Viskosität von 800 Poise bei 60 °C, einen Penetrationspunkt im Bereich von 80 bis 100 (1/10 mm) bei 25 °C und einen minimalen Erweichungspunkt von 40 °C aufweist; oder Bitumen der Viskositätsklasse-20 (VG20), umfassend 15 bis 35 Gew.% an Aromaten angereicherte entasphaltierte Ölextraktfraktion, und mit einer minimalen kinematischen Viskosität von 300 cSt bei 135 °C, einer minimalen absoluten Viskosität von 1600 Poise bei 60 °C, einem Penetrationspunkt im Bereich von 60 bis 80 (1/10 mm) bei 25 °C und einem minimalen Erweichungspunkt von 45 °C.

**5.** Verfahren nach Anspruch 1, wobei das Bitumen ein Bitumen der Viskositätsklasse-30 (VG30) ist, das 10 bis 30 Gew.% an Aromaten angereicherte entasphaltierte Ölextraktfraktion umfasst, und eine minimale kinematische Viskosität von 350 cSt bei 135 °C, eine minimale absolute Viskosität von 2400 Poise bei 60 °C, einen Penetrationspunktbereich von 50 bis 70 (1/10 mm) bei 25 °C und einen minimalen Erweichungspunkt von 47 °C aufweist; oder Bitumen der Viskositätsklasse-40 (VG40), umfassend 5 bis 25 Gew.% an Aromaten angereicherte entasphaltierte Ölextraktfraktion, und mit einer minimalen kinematischen Viskosität von 400 cSt bei 135 °C, einer minimalen absoluten Viskosität von 3200 Poise bei 60 °C, einem Penetrationspunktbereich von 40 bis 60 (1/10 mm) bei 25 °C und einem minimalen Erweichungspunkt von 50 °C.

## Revendications

**1.** Procédé de préparation de bitume, comprenant :

> a. la soumission d'un pétrole brut réduit à un procédé de distillation pour obtenir un résidu sous vide ayant un point d'ébullition initial (IBP) minimal de 490 °C et comprenant au moins 10 % en poids d'éléments dans la plage d'ébullition de l'IBP jusqu'à 550 °C ;
> b. la soumission du résidu sous vide ainsi obtenu à un procédé de désasphaltage par mise en contact avec les huit parties en volume de propane ajoutées à une partie en volume de résidu sous vide avec des températures de tête et de pied de colonne de 65 °C et de 55 °C pour obtenir une huile désasphaltée et de l'asphalte ;
> c. la séparation de l'asphalte ainsi produit ;
> d. la soumission de l'huile désasphaltée à un procédé d'extraction des composés aromatiques avec un solvant à base de N-méthylpyrolidone (NMP) dans un extracteur à contre-courant avec une température de tête et de pied de 90 °C et de 80 °C et un rapport du solvant à l'huile (volume/volume) maintenu à 2,25 pour obtenir une fraction d'extrait d'huile désasphaltée enrichie en composés aromatiques ayant un point d'ébullition initial (IBP) minimal de 490 °C ; comprenant au moins 10 % en poids d'éléments dans la plage d'ébullition de l'IBP jusqu'à 550 °C ; des éléments à base de composés aromatiques polycycliques choisis dans le groupe comprenant le benzo(a)anthracène+chrysène, le benzo(j)fluoranthène, le benzo(e)pyrène, le benzo(b)fluoranthène, le benzo(K)fluoranthène, le benzo(a)pyrène et le dibenzo(a,h)anthracène étant présents dans une concentration inférieure à 10 ppm ; avec une concentration en benzo(a)pyrène inférieure à 1 ppm ; un point d'aniline dans la plage de 55 ° à 70 °C et des éléments participant au carbone aromatique dans la plage de 25 à 75 % en poids ;
> et e. le mélange de l'asphalte avec 1 à 40 % en poids de la fraction d'extrait d'huile désasphaltée enrichie en composés aromatiques ainsi obtenue à l'étape (d) pour produire du bitume.

**2.** Procédé selon la revendication 1, dans lequel le pétrole brut réduit est choisi dans un groupe comprenant l'Arab mix, le Basrah Light et le Kuwait et le pétrole brut réduit présente les caractéristiques suivantes :

| Densité | 0, 9489 |
|---|---|
| Données de distillation (D1160) en °C | |
| IBP | 277 |
| 5 % en volume | 325 |
| 10 % en volume | 349 |
| 20 % en volume | 389 |
| 30 % en volume | 432 |
| 40 % en volume | 478 |
| 50 % en volume | 521 |

(suite)

| Données de distillation (D1160) en °C | |
|---|---|
| 60 % en volume | 561 |

3. Procédé selon la revendication 1, dans lequel la soumission du pétrole brut réduit à une distillation comprend la réalisation d'un procédé de distillation selon l'une quelconque des procédures numéro D1160 ou D5236 de la norme ASTM.

4. Procédé selon la revendication 1, dans lequel ledit bitume est un bitume de grade de viscosité 10 (VG10) comprenant de 20 à 40 % en poids de fraction d'extrait d'huile désasphaltée enrichie en composés aromatiques et présentant une viscosité cinématique minimale de 250 cSt à 135 °C, une viscosité absolue minimale de 800 poises à 60 °C, un point de pénétration allant de 80 à 100 (1/10 mm) à 25 °C et un point de ramollissement minimal de 40 °C ; ou un bitume de grade de viscosité 20 (VG20) comprenant de 15 à 35 % en poids de fraction d'extrait d'huile désasphaltée enrichie en composés aromatiques et présentant une viscosité cinématique minimale de 300 cSt à 135 °C, une viscosité absolue minimale de 1600 poises à 60 °C, un point de pénétration allant de 60 à 80 (1/10 mm) à 25 °C et un point de ramollissement minimal de 45 °C.

5. Procédé selon la revendication 1, dans lequel ledit bitume est un bitume de grade de viscosité 30 (VG30) comprenant de 10 à 30 % en poids de fraction d'extrait d'huile désasphaltée enrichie en composés aromatiques et présentant une viscosité cinématique minimale de 350 cSt à 135 °C, une viscosité absolue minimale de 2400 poises à 60 °C, une plage du point de pénétration de 50 à 70 (1/10 mm) à 25 °C et un point de ramollissement minimal de 47 °C ; ou un bitume de grade de viscosité 40 (VG40) comprenant de 5 à 25 % en poids de fraction d'extrait d'huile désasphaltée enrichie en composés aromatiques et présentant une viscosité cinématique minimale de 400 cSt à 135 °C, une viscosité absolue minimale de 3200 poises à 60 °C, une plage du point de pénétration de 40 à 60 (1/10 mm) à 25 °C et un point de ramollissement minimal de 50 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5308470 A
- US 5961709 A
- US 5403526 A
- US 5034119 A
- EP 1148112 A
- WO 2013140272 A
- WO 2010072832 A